# EUROPEAN PATENT APPLICATION

(11) **EP 4 614 789 A1**
(43) Date of publication of application: **10.09.2025**
(21) Application number: 25162168.6
(22) Date of filing: 06.03.2025
(51) Int. Cl.: H02M 3/158, H02J 7/00, H02M 7/5387, H02M 1/12

(54) **SPLIT-PHASE INVERTER WITH COUPLED INDUCTORS AND ACTIVE BALANCING CIRCUIT**

(30) Priority: 07.03.2024 CN 202410266116
(71) Applicant: Huawei Digital Power Technologies Co., Ltd., Shenzhen, Guangdong 518043 (CN)
(72) Inventor: MA, Rui, Shenzhen 518043 (CN); ZHANG, Fenggang, Shenzhen 518043 (CN); WEI, Yuliang, Shenzhen 518043 (CN); AI, Haotian, Shenzhen 518043 (CN)
(74) Representative: Gill Jennings & Every LLP

(57) **Abstract**

This application provides an inverter, a photovoltaic plus storage system, and an inverter control method. The inverter includes an inverter circuit, a filter circuit, and a balanced circuit. The inverter circuit is configured to convert a direct current into an alternating current. The filter circuit is configured to filter the alternating current, and a filtered alternating current is used to supply power to a load. The inverter further includes a controller. The controller is configured to: when the inverter runs in an off-grid mode and an absolute value of a voltage difference between two loads that are connected in series is greater than a voltage threshold, control a switching transistor in two switching transistors to be turned on, to enable the voltage difference to be less than the voltage threshold, where a series connection point of the two loads that are connected in series is connected to a series connection point of two capacitors that are connected in series. This application can resolve a problem of two-phase output voltage imbalance in a running process of the inverter, to ensure normal running of the inverter.

## Description

### TECHNICAL FIELD

This application relates to the field of electric power technologies, and in particular, to an inverter, a photovoltaic plus storage system, and an inverter control method.

### BACKGROUND

An inverter may convert a direct current of a photovoltaic module into an alternating current, and is currently widely used in a photovoltaic power generation system. A coupled inductor is generally selected as an inductor of a filter circuit of the inverter to reduce costs. Because the inductor is the coupled inductor, drive signals of two groups of switching transistors in the inverter need to be the same. When the inverter is in an off-grid state, if the inverter supplies power to two loads that are connected in series, and the two loads have different rated power, a problem of two-phase output voltage imbalance occurs in a running process of the inverter. This affects normal running of the inverter, and may even cause the inverter to stop operating.

### SUMMARY

This application provides an inverter, a photovoltaic plus storage system, and an inverter control method, to resolve a problem of two-phase output voltage imbalance in a running process of the inverter, so as to ensure normal running of the inverter.

According to a first aspect, an inverter is provided, including an inverter circuit, a filter circuit, and a balanced circuit. The inverter circuit is configured to convert a direct current into an alternating current. The filter circuit is configured to filter the alternating current, and a filtered alternating current is used to supply power to a load. The filter circuit includes a coupled inductor and two capacitors that are connected in series, where two input ports of the coupled inductor are connected to the inverter circuit, and the two capacitors that are connected in series are connected between two output ports of the coupled inductor. The balanced circuit includes two switching transistors and a first inductor, where the two switching transistors are connected in series and then connected between a positive bus and a negative bus, one end of the first inductor is connected to a series connection point of the two switching transistors, and the other end of the first inductor is connected to a series connection point of the two capacitors that are connected in series. The inverter further includes a controller. The controller is configured to: when the inverter runs in an off-grid mode and an absolute value of a voltage difference between two loads that are connected in series is greater than a voltage threshold, control a switching transistor in the two switching transistors to be turned on, for the voltage difference to be less than the voltage threshold, where a series connection point of the two loads that are connected in series is connected to the series connection point of the two capacitors that are connected in series.

The inverter in this embodiment of this application includes a balanced circuit. When the inverter runs in an off-grid mode and the absolute value of the voltage difference between the two loads that are connected in series is greater than the voltage threshold, the controller may control the switching transistors in the balanced circuit to be turned on. Because the two switching transistors in the balanced circuit are connected in series and then connected between the positive bus and the negative bus, that is, one switching transistor is directly connected to the positive bus, and the other switching transistor is directly connected to the negative bus, when the switching transistor in the two switching transistors is turned on, a positive voltage of the positive bus may increase a voltage of the series connection point of the two loads, and a negative voltage of the negative bus may reduce a voltage of the series connection point of the two loads, so as to reduce the voltage difference between the two loads. This can resolve a problem of two-phase output voltage imbalance in a running process of the inverter, thereby ensuring normal running of the inverter.

In addition, in this embodiment of this application, the balanced circuit of the inverter includes only two switching transistors and one inductor, so that a problem of two-phase output voltage imbalance in a running process of the inverter can be resolved. A quantity of components is small, costs are low, and implementation is easy.

With reference to the first aspect, in a possible design, the inverter circuit includes a first bridge arm and a second bridge arm, each of the first bridge arm and the second bridge arm includes two switching transistors that are connected in series, and each switching transistor includes a parallel freewheel diode and freewheeling directions of all freewheel diodes are the same. One switching transistor of the first bridge arm and one switching transistor of the second bridge arm form an upper half bridge arm, and the other switching transistor of the first bridge arm and the other switching transistor of the second bridge arm form a lower half bridge arm. The one switching transistor of the first bridge arm and the other switching transistor of the second bridge arm are one group of switching transistors, and the other switching transistor of the first bridge arm and the one switching transistor of the second bridge arm are another group of switching transistors. The two loads include a first load and a second load. One end of the first load is connected to a series connection point of the two switching transistors of the second bridge arm through the filter circuit, and one end of the second load is connected to a series connection point of the two switching transistors of the first bridge arm through the filter circuit. The series connection point of the first load and the second load is connected to the series connection point of the two capacitors that are connected in series. The controller is configured to: when a voltage of the first load is greater than a voltage of the second load and the one group of switching transistors are turned on, or when a voltage of the first load is less than a voltage of the second load and the another group of switching transistors are turned on, control a switching transistor that is in the balanced circuit and that is directly connected to the negative bus to be turned on; or when a voltage of the first load is greater than a voltage of the second load and the another group of switching transistors are turned on, or when a voltage of the first load is less than a voltage of the second load and the one group of switching transistor are turned on, control a switching transistor that is in the balanced circuit and that is directly connected to the positive bus to be turned on.

In this embodiment of this application, the controller may control, based on a specific case, the switching transistors in the balanced circuit to be turned on. Specifically, when the voltage of the first load is greater than the voltage of the second load and the one group of switching transistors in the inverter circuit are turned on, or when the voltage of the first load is less than a voltage of the second load and the another group of switching transistors in the inverter circuit are turned on, a voltage of the connection point between the two loads is high, the controller controls the switching transistor that is in the balanced circuit and that is directly connected to the negative bus to be turned on, and a negative voltage of the negative bus can reduce the voltage of the series connection point of the two loads, so as to reduce the voltage difference between the two loads. When the voltage of the first load is greater than the voltage of the second load and the another group of switching transistors are turned on, or when the voltage of the first load is less than the voltage of the second load and the one group of switching transistors are turned on, a voltage of the connection point between the two loads is low, the controller controls the switching transistor that is in the balanced circuit and that is directly connected to the positive bus to be turned on, and a positive voltage of the positive bus can improve the voltage of the series connection point of the two loads, so as to reduce the voltage difference between the two loads.

With reference to the first aspect, in a possible design, the inverter further includes a voltage loop regulator, a current loop regulator, and an amplitude limiter, where the amplitude limiter is configured to limit a maximum current value in the balanced circuit. The voltage loop regulator is configured to output a first current value based on the voltage difference. The amplitude limiter is configured to output a second current value based on the first current value. The current loop regulator is configured to generate a duty cycle of the switching transistors in the balanced circuit based on a current difference between the second current value and a current value on the first inductor, for the voltage difference to be less than the voltage threshold. The second current value is less than or equal to the first current value.

In this embodiment of this application, the amplitude limiter outputs the second current value based on the first current value output by the voltage loop regulator, and the current loop regulator generates the duty cycle of the switching transistor in the balanced circuit based on the current difference between the second current value and the current value on the first inductor, so that the voltage difference between the two loads can be reduced until the voltage difference is less than the voltage threshold. In this way, a problem of two-phase output voltage imbalance in a running process of the inverter can be resolved.

With reference to the first aspect, in a possible design, if the first current value is less than or equal to an absolute value of the maximum current value, the second current value is equal to the first current value; or if the first current value is greater than an absolute value of the maximum current value, the second current value is equal to the maximum current value.

In this embodiment of this application, the amplitude limiter is configured to limit the maximum current value in the balanced circuit, and the second current value output by the amplitude limiter is less than or equal to the absolute value of the maximum current value, so that a switching transistor damage caused by a large current flowing through the switching transistor in the balanced circuit can be avoided, and a circuit topology can be protected.

With reference to the first aspect, in a possible design, the controller is further configured to reduce a dead time of the switching transistors in the inverter circuit.

In this embodiment of this application, when the one group of switching transistors in the inverter circuit are turned on and then turned off, a current of the coupled inductor flows through the freewheel diode of the another group of switching transistors in the inverter circuit to form a freewheeling loop. When the one group of switching transistors are turned on again, a current flows through a freewheel diode of one switching transistor in the one group of switching transistors preferentially, and this aggravates a problem of two-phase output voltage imbalance. Therefore, the controller may further reduce the voltage difference between the two loads by reducing the dead time of the switching transistors in the inverter circuit. In this way, a case of two-phase output voltage imbalance can be improved.

With reference to the first aspect, in a possible design, the inverter further includes another two capacitors that are connected in series. The another two capacitors that are connected in series are connected between the positive bus and the negative bus, and a series connection point of the another two capacitors that are connected in series is connected to one end of the first inductor.

In this embodiment of this application, the switching transistors in the balanced circuit may not be able to reduce the voltage difference between two phases without limitation, and the two additional capacitors that are connected in series may further improve two-phase output voltage imbalance. In addition, the two capacitors that are connected in series may reduce a maximum current that can be borne by the switching transistor in the balanced circuit, thereby reducing a selection specification of the switching transistor in the balanced circuit, and reducing costs of the switching transistor.

According to a second aspect, a photovoltaic plus storage system is provided. The photovoltaic plus storage system includes a photovoltaic module, an energy storage apparatus, and the inverter according to any one of the possible designs of the first aspect. The energy storage apparatus is configured to store a direct current from the photovoltaic module, and the inverter is configured to convert the direct current from the photovoltaic module into an alternating current.

For technical effects that may be achieved in the second aspect, refer to descriptions of technical effects that may be achieved in any possible implementation of the first aspect. Details are not described herein again.

According to a third aspect, an inverter control method is provided, including: when an inverter runs in an off-grid mode and an absolute value of a voltage difference between two loads that are connected in series is greater than a voltage threshold, controlling a switching transistor in two switching transistors in a balanced circuit of the inverter to be turned on, for the voltage difference to be less than the voltage threshold, where a series connection point of the two loads that are connected in series is connected to a series connection point of two capacitors that are connected in series in a filter circuit of the inverter. The filter circuit includes a coupled inductor and the two capacitors that are connected in series, two input ports of the coupled inductor are connected to an inverter circuit of the inverter, the two capacitors that are connected in series are connected between two output ports of the coupled inductor, the balanced circuit includes the two switching transistors and a first inductor, the two switching transistors are connected in series and then connected between a positive bus and a negative bus, one end of the first inductor is connected to a series connection point of the two switching transistors, and the other end of the first inductor is connected to the series connection point of the two capacitors that are connected in series.

With reference to the third aspect, in a possible design, the controlling a switching transistor in two switching transistors in a balanced circuit of the inverter to be turned on includes: when a voltage of a first load is greater than a voltage of a second load and one group of switching transistors in the inverter circuit are turned on, or when a voltage of a first load is less than a voltage of the second load and another group of switching transistors in the inverter circuit are turned on, controlling a switching transistor that is in the balanced circuit and that is directly connected to the negative bus to be turned on; or when a voltage of a first load is greater than a voltage of a second load and another group of switching transistors in the inverter circuit are turned on, or when a voltage of a first load is less than a voltage of a second load and one group of switching transistors in the inverter circuit are turned on, controlling a switching transistor that is in the balanced circuit and that is directly connected to the positive bus to be turned on.

The inverter circuit includes a first bridge arm and a second bridge arm, each of the first bridge arm and the second bridge arm includes two switching transistors that are connected in series, and each switching transistor includes a parallel freewheel diode and freewheeling directions of all freewheel diodes are the same. One switching transistor of the first bridge arm and one switching transistor of the second bridge arm form an upper half bridge arm, and the other switching transistor of the first bridge arm and the other switching transistor of the second bridge arm form a lower half bridge arm. The one switching transistor of the first bridge arm and the other switching transistor of the second bridge arm are the one group of switching transistors, and the other switching transistor of the first bridge arm and the one switching transistor of the second bridge arm are the another group of switching transistors. One end of the first load is connected to a series connection point of the two switching transistors of the second bridge arm through the filter circuit, and one end of the second load is connected to a series connection point of the two switching transistors of the first bridge arm through the filter circuit. The series connection point of the first load and the second load is connected to the series connection point of the two capacitors that are connected in series.

With reference to the third aspect, in a possible design, the method further includes: reducing a dead time of the switching transistors in the inverter circuit.

For technical effects that may be achieved in the third aspect, refer to descriptions of technical effects that may be achieved in any possible implementation of the first aspect. Details are not described herein again.

### BRIEF DESCRIPTION OF DRAWINGS

FIG. 1 is a diagram of a scenario to which this application is applicable;
FIG. 2 is a diagram of an inverter;
FIG. 3 to FIG. 17 are diagrams of an inverter according to embodiments of this application; and
FIG. 18 is a diagram of an inverter control method according to an embodiment of this application.

### DESCRIPTION OF EMBODIMENTS

The following describes technical solutions of this application with reference to accompanying drawings.

For ease of understanding, the following first briefly describes terms used in this application.

On-grid: A direct current generated by a generator set is converted by an inverter into an alternating current that meets a requirement of a power grid, and then the alternating current is input to the power grid. Therefore, on-grid may be understood as that a power generation system is connected to the power grid.

Off-grid: A direct current generated by a generator set is converted by an inverter into an alternating current, and the alternating current cannot be transmitted to a power grid. Therefore, off-grid may be understood as that a power generation system is not connected to the power grid.

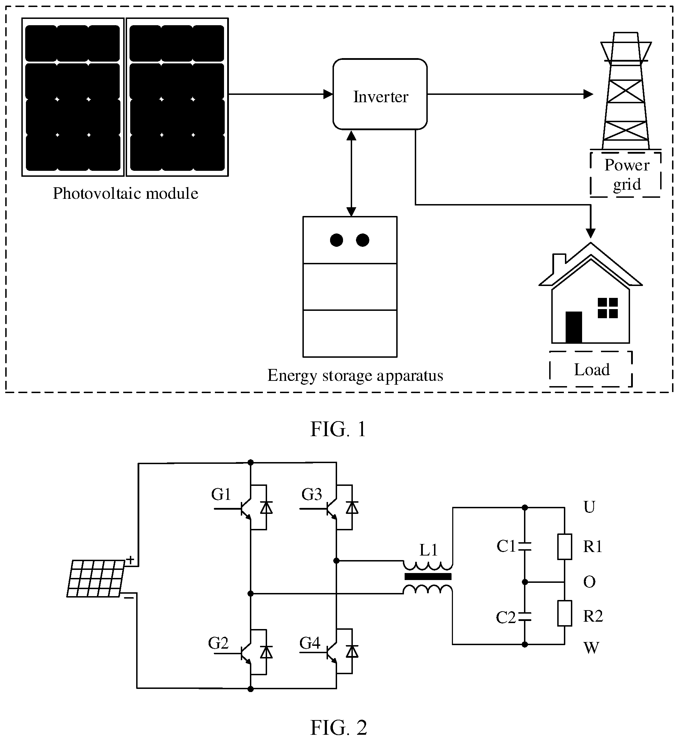

FIG. 1 is a diagram of a possible scenario to which this application is applicable. Refer to FIG. 1. A photovoltaic module converts solar energy into a direct current through photovoltaic effect; and an inverter converts the direct current into an alternating current, and then sends the alternating current to a grid or supplies power to a load. The inverter may alternatively convert a direct current from an energy storage apparatus into an alternating current, and then sends the alternating current to the grid or supplies power to the load.

FIG. 2 is a diagram of an inverter. To reduce costs, a coupled inductor is generally selected as an inductor L1. Because the inductor L1 is the coupled inductor, drive signals of two groups of switching transistors in an inverter need to be the same. In other words, drive signals of switching transistors G1 and G4 are the same, and drive signals of switching transistors G2 and G3 are the same. When the inverter is in an off-grid state, if the inverter supplies power to two loads that are connected in series, and the two loads have different rated power, a problem of two-phase output voltage imbalance, namely, imbalance between a voltage between a phase U and a phase O and a voltage between the phase O and a phase W occurs in a running process of the inverter. This affects normal running of the inverter, and may even cause the inverter to stop operating.

Therefore, this application provides an inverter, to resolve a problem of two-phase output voltage imbalance in a running process of the inverter, so as to ensure normal running of the inverter.

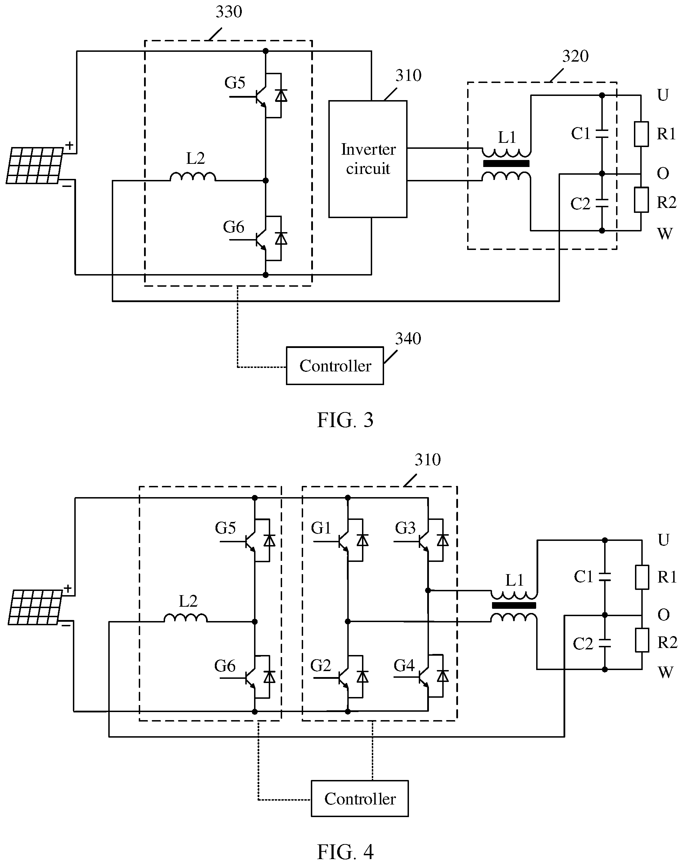

As shown in FIG. 3, the inverter includes an inverter circuit 310, a filter circuit 320, and a balanced circuit 330. The inverter circuit 310 is configured to convert a direct current into an alternating current. The filter circuit 320 is configured to filter the alternating current, and a filtered alternating current is used to supply power to a load.

The filter circuit 320 includes a coupled inductor L1 and two capacitors C1 and C2 that are connected in series, where two input ports of the coupled inductor L1 are connected to the inverter circuit 310, and the two capacitors C1 and C2 that are connected in series are connected between two output ports of the coupled inductor L1.

The balanced circuit 330 includes two switching transistors G5 and G6 and a first inductor L2, where the two switching transistors G5 and G6 are connected in series and then connected between a positive bus and a negative bus, one end of the first inductor L2 is connected to a series connection point of the two switching transistors G5 and G6, and the other end of the first inductor L2 is connected to a series connection point of the two capacitors C1 and C2 that are connected in series.

The switching transistor in this embodiment of this application may be specifically a giant transistor (Giant Transistor, GTR), a metal-oxide-semiconductor field-effect transistor (metal-oxide-semiconductor field-effect transistor, MOSFET), an insulated gate bipolar transistor (insulated gate bipolar transistor, IGBT), a gallium nitride (gallium nitride, GaN) high electron mobility transistor (high electron mobility transistor, HEMT), or the like. The GTR is used as an example in FIG. 3.

The inverter further includes a controller 340. The controller 340 is configured to: when the inverter runs in an off-grid mode and an absolute value of a voltage difference between two loads R1 and R2 that are connected in series is greater than a voltage threshold, control a switching transistor in the two switching transistors G5 and G6 to be turned on, to enable the voltage difference to be less than the voltage threshold, where a series connection point of the two loads R1 and R2 that are connected in series is connected to the series connection point of the two capacitors C1 and C2 that are connected in series.

In this embodiment of this application, the inverter runs in an off-grid mode. In other words, an alternating current output by the inverter is not used to supply power to a load in a power grid, but is used to supply power to a separate load. When the alternating current output by the inverter is used to supply power to the two loads that are connected in series, if the two loads have different rated power, voltages of the two loads are different, resulting in imbalance between a voltage between a phase U and a phase O and a voltage between the phase O and a phase W. In other words, a voltage of the phase O is a non-zero value. In this case, the controller may control the switching transistors G5 and G6 in the balanced circuit to be turned on. The switching transistor G5 is directly connected to the positive bus. When the switching transistor G5 is turned on, a positive voltage of the positive bus may increase the voltage of the phase O. The switching transistor G6 is directly connected to the negative bus. When the switching transistor G6 is turned on, a negative voltage of the negative bus may decrease the voltage of the phase O. This can resolve a problem of imbalance between the voltage between the phase U and the phase O and the voltage between the phase O and the phase W.

The inverter in this embodiment of this application includes a balanced circuit. When the inverter runs in an off-grid mode and the absolute value of the voltage difference between the two loads that are connected in series is greater than the voltage threshold, the controller may control the switching transistors in the balanced circuit to be turned on. Because the two switching transistors in the balanced circuit are connected in series and then connected between the positive bus and the negative bus, that is, one switching transistor is directly connected to the positive bus, and the other switching transistor is directly connected to the negative bus, when the switching transistor in the two switching transistors is turned on, the positive voltage of the positive bus may increase a voltage of the series connection point of the two loads, and the negative voltage of the negative bus may reduce a voltage of the series connection point of the two loads, so as to reduce the voltage difference between the two loads. This can resolve a problem of two-phase output voltage imbalance in a running process of the inverter, thereby ensuring normal running of the inverter.

In addition, in this embodiment of this application, the balanced circuit of the inverter includes only two switching transistors and one inductor, so that a problem of two-phase output voltage imbalance in a running process of the inverter can be resolved. A quantity of components is small, costs are low, and implementation is easy.

The following describes in detail a case of controlling the switching transistors G5 and G6 to be turned on by the controller 340.

In an embodiment, as shown in FIG. 4, the inverter circuit 310 includes a first bridge arm and a second bridge arm, each of the first bridge arm and the second bridge arm includes two switching transistors that are connected in series, and each switching transistor includes a parallel freewheel diode and freewheeling directions of all freewheel diodes are the same. One switching transistor G1 of the first bridge arm and one switching transistor G3 of the second bridge arm form an upper half bridge arm, and the other switching transistor G2 of the first bridge arm and the other switching transistor G4 of the second bridge arm form a lower half bridge arm. The one switching transistor G1 of the first bridge arm and the other switching transistor G4 of the second bridge arm are one group of switching transistors, and the other switching transistor G2 of the first bridge arm and the one switching transistor G3 of the second bridge arm are another group of switching transistors.

In this embodiment of this application, each switching transistor in the inverter circuit includes a parallel freewheel diode, and the freewheel diode may be referred to as a body-diode (body-diode).

The two loads include a first load R1 and a second load R2. One end of the first load R1 is connected to a series connection point of the two switching transistors of the second bridge arm through the filter circuit, and one end of the second load R2 is connected to a series connection point of the two switching transistors of the first bridge arm through the filter circuit. The series connection point of the first load R1 and the second load R2 is connected to the series connection point of the two capacitors C1 and C2 that are connected in series.

The controller 340 is configured to: when a voltage of the first load R1 is greater than a voltage of the second load R2 and the one group of switching transistors G1 and G4 are turned on, or when a voltage of the first load R1 is less than a voltage of the second load R2 and the another group of switching transistors G2 and G3 are turned on, control the switching transistor G6 that is in the balanced circuit and that is directly connected to the negative bus to be turned on.

The controller 340 is configured to: when a voltage of the first load R1 is greater than a voltage of the second load R2 and the another group of switching transistors G2 and G3 are turned on, or when a voltage of the first load R1 is less than a voltage of the second load R2 and the one group of switching transistor G1 and G4 are turned on, control the switching transistor G5 that is in the balanced circuit and that is directly connected to the positive bus to be turned on.

In this embodiment of this application, a rated power of the load R1 may be equal to or not equal to a rated power of the load R2. When the rated power of the load R1 is equal to the rated power of the load R2, the voltages of the load R1 and the load R2 are equal generally, and the controller does not need to control the switching transistors G5 and G6 to be turned on. When the rated power of the load R1 is not equal to the rated power of the load R2, the voltage of the load R1 is not equal to the voltage of the load R2 generally, and the controller may control the switching transistors G5 and G6 to be turned on.

### Case 1: The rated power of the load R1 is equal to the rated power of the load R2

Because the rated power of the load R1 is equal to the rated power of the load R2, the voltages of the load R1 and the load R2 are equal. In this case, the controller 340 does not need to control the switching transistor G5 or the switching transistor G6 to be turned on.

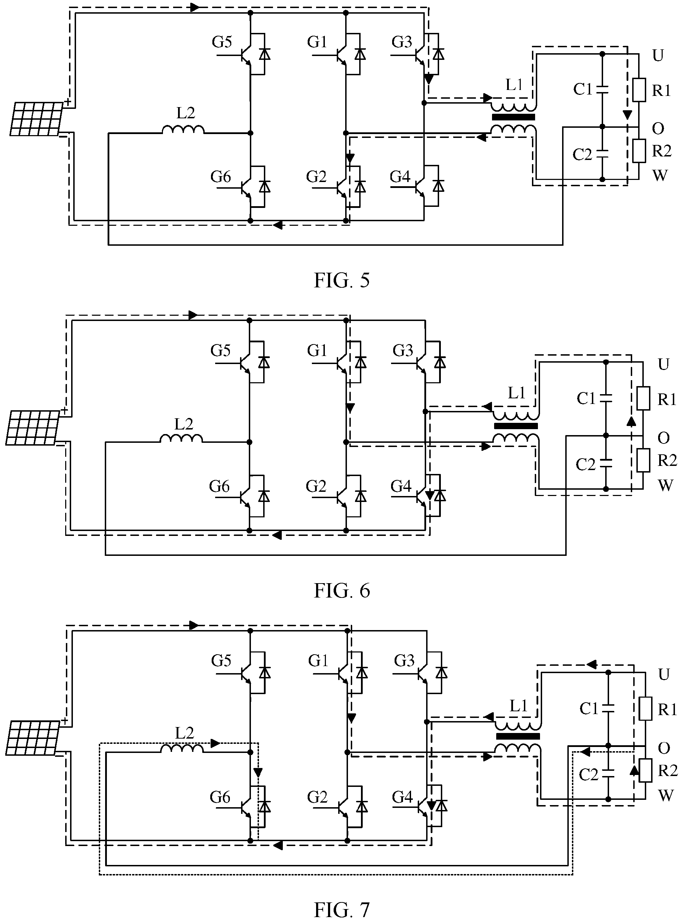

Specifically, when the switching transistors G2 and G3 are turned on, a current flow direction is shown in FIG. 5. Refer to FIG. 5. A direct current output by a photovoltaic module flows through the switching transistor G3, the inductor L1, the load R1, the load R2, the inductor L1, and the switching transistor G2 to form a current loop. In other words, the current flows out from a positive electrode of the photovoltaic module, flows through the switching transistor G3, the inductor L1, the load R1, the load R2, the inductor L1, and the switching transistor G2, and returns to a negative electrode of the photovoltaic module.

When the switching transistors G1 and G4 are turned on, a current flow direction is shown in FIG. 6. Refer to FIG. 6. The direct current output by the photovoltaic module flows through the switching transistor G1, the inductor L1, the load R2, the load R1, the inductor L1, and the switching transistor G4 to form a current loop. In other words, the current flows out from a positive electrode of the photovoltaic module, flows through the switching transistor G1, the inductor L1, the load R2, the load R1, the inductor L1, and the switching transistor G4, and returns to a negative electrode of the photovoltaic module.

In this case, the voltage of the load R1 is equal to the voltage of the load R2. In other words, the voltage between the phase U and the phase O is equal to the voltage between the phase W and the phase O. For example, when the voltage between the phase U and the phase W is 202 V, the voltage between the phase U and the phase O, and the voltage between the phase O and the phase W both need to be a rated value, where the rated value is half of the voltage between the phase U and the phase W, that is, 101 V. In this case, the voltage between the phase U and the phase O and the voltage between the phase W and the phase O are in a balanced state.

### Case 2: The rated power of the load R1 is not equal to the rated power of the load R2

Because the rated power of the load R1 is different from the rated power of the load R2, the voltage of the load R1 is not equal to the voltage of the load R2. When the voltage difference between the load R1 and the load R2 is greater than the voltage threshold, the controller may control the switching transistor G5 or the switching transistor G6 to be turned on, for the voltage difference between the load R1 and the load R2 to be less than the voltage threshold.

The following describes in detail a case of controlling the switching transistor G5 or the switching transistor G6 to be turned on by the controller.

### 1. The controller controls the switching transistor G6 to be turned on

(1) When the rated power of the load R1 is less than the rated power of the load R2, the voltage of the load R1 is greater than the voltage of the load R2. When the switching transistors G1 and G4 are turned on, a current flow direction is shown in FIG. 7. Refer to FIG. 7. When a part of the direct current output by the photovoltaic module flows through the switching transistor G1, the inductor L1, the load R2, the load R1, the inductor L1, and the switching transistor G4 to form a current loop, the other part of the direct current flows through the switching transistor G1, the inductor L1, the load R2, the inductor L2, and the switching transistor G6 to form a current loop.

In this embodiment of this application, when the switching transistors G1 and G4 are turned on, the phase U is connected to the negative bus, and the phase W is connected to the positive bus. When the rated power of the load R1 is less than the rated power of the load R2, the voltage of the load R1 is greater than the voltage of the load R2, and the voltage of the phase O is no longer 0 V, but is a value that deviates from 0 V. Because the phase U is connected to the negative bus, and the phase W is connected to the positive bus, the voltage of the phase O is a value greater than 0. Therefore, both the voltage between the phase U and the phase O and the voltage between the phase O and the phase W deviate from the rated value.

Specifically, for example, the voltage threshold is 2 V. When the voltage between the phase U and the phase W is 202 V, if the voltage of the phase O is 3 V, the voltage between the phase U and the phase O is 104 V, and the voltage between the phase O and the phase W is 98 V. In other words, a voltage difference between the voltage between the phase U and the phase O and the voltage between the phase O and the phase W is 6 V, and the voltage difference is greater than the voltage threshold. The controller may control the switching transistor G6 in the balanced circuit to be turned on.

To reduce the voltage difference between the voltage between the phase U and the phase O and the voltage between the phase O and the phase W, it may be considered to reduce the voltage of the phase O. Because the switching transistor G6 is connected to the negative bus, the controller controls the switching transistor G6 to be turned on. When the switching transistor G6 is turned on, the negative voltage of the direct current output on the negative bus may decrease the voltage of the phase O, so that the voltage between the phase U and the phase O decreases, and the voltage between the phase O and the phase W increases. When the voltage difference between the voltage between the phase U and the phase O and the voltage between the phase O and the phase W is less than or equal to the voltage threshold, the controller turns off the switching transistor G6, to reduce the voltage difference between the voltage between the phase U and the phase O and the voltage between the phase O and the phase W, so as to solve the problem of the imbalance between the voltage between the phase U and the phase O and the voltage between the phase O and the phase W.

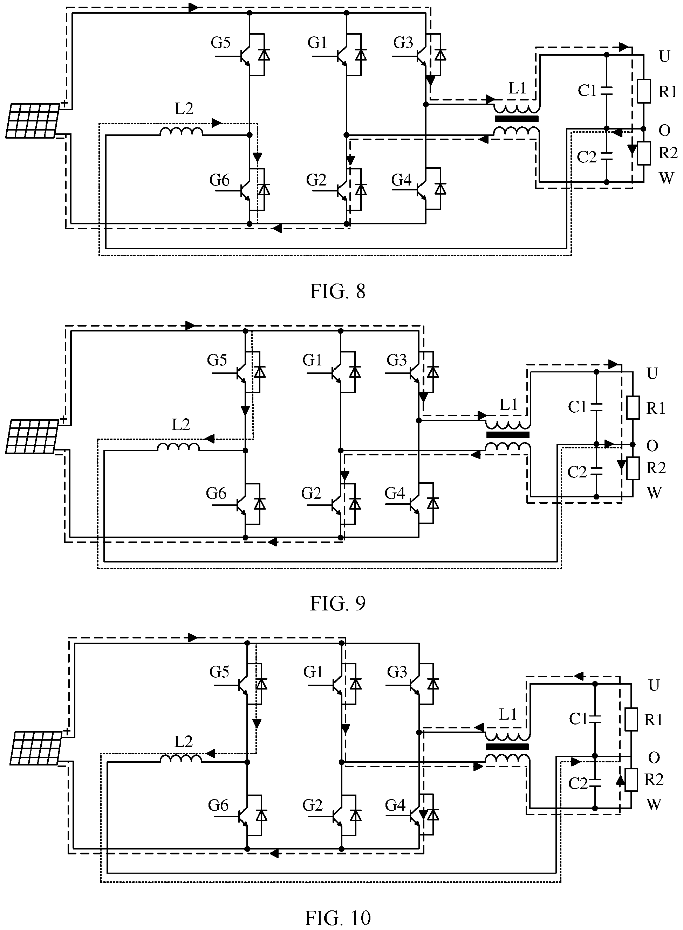

(2) When the rated power of the load R1 is greater than the rated power of the load R2, the voltage of the load R1 is less than the voltage of the load R2. When the switching transistors G2 and G3 are turned on, a current flow direction is shown in FIG. 8. Refer to FIG. 8. When a part of the direct current output by the photovoltaic module flows through the switching transistor G3, the inductor L1, the load R1, the load R2, the inductor L1, and the switching transistor G2 to form a current loop, the other part of the direct current flows through the switching transistor G3, the inductor L1, the load R1, the inductor L2, and the switching transistor G6 to be connected to the negative bus.

In this embodiment of this application, when the switching transistors G2 and G3 are turned on, the phase U is connected to the positive bus, and the phase W is connected to the negative bus. When the rated power of the load R1 is greater than the rated power of the load R2, the voltage of the load R1 is less than the voltage of the load R2, and the voltage of the phase O is no longer 0 V, but is a value that deviates from 0 V. Because the phase U is connected to the positive bus, and the phase W is connected to the negative bus, the voltage of the phase O is a value greater than 0. Therefore, both the voltage between the phase U and the phase O and the voltage between the phase O and the phase W deviate from the rated value.

Specifically, for example, the voltage threshold is still 2 V. When the voltage between the phase U and the phase W is 202 V, if the voltage of the phase O is 3 V, the voltage between the phase U and the phase O is 98 V, and the voltage between the phase O and the phase W is 104 V. In other words, a voltage difference between the voltage between the phase U and the phase O and the voltage between the phase O and the phase W is 6 V, and the voltage difference is greater than the voltage threshold. The controller may control the switching transistor G6 in the balanced circuit to be turned on.

To reduce the voltage difference between the voltage between the phase U and the phase O and the voltage between the phase O and the phase W, it may be considered to reduce the voltage of the phase O. Because the switching transistor G6 is connected to the negative bus, the controller controls the switching transistor G6 to be turned on. When the switching transistor G6 is turned on, the negative voltage on the negative bus may decrease the voltage of the phase O, so that the voltage between the phase U and the phase O increases, and the voltage between the phase O and the phase W decreases. When the voltage difference between the voltage between the phase U and the phase O and the voltage between the phase O and the phase W is less than or equal to the voltage threshold, the controller turns off the switching transistor G6, to reduce the voltage difference between the voltage between the phase U and the phase O and the voltage between the phase O and the phase W, so as to solve the problem of the imbalance between the voltage between the phase U and the phase O and the voltage between the phase O and the phase W.

### 2. The controller controls the switching transistor G5 to be turned on

(1) When the rated power of the load R1 is less than the rated power of the load R2, the voltage of the load R1 is greater than the voltage of the load R2. When the switching transistors G2 and G3 are turned on, a current flow direction is shown in FIG. 9. Refer to FIG. 9. When a part of the direct current output by the photovoltaic module flows through the switching transistor G3, the inductor L1, the load R1, the load R2, the inductor L1, and the switching transistor G2 to form a current loop, the other part of the direct current flows through the switching transistor G5, the inductor L2, the load R2, the inductor L1, and the switching transistor G2 to form a current loop.

In this embodiment of this application, when the switching transistors G2 and G3 are turned on, the phase U is connected to the positive bus, and the phase W is connected to the negative bus. When the rated power of the load R1 is less than the rated power of the load R2, the voltage of the load R1 is greater than the voltage of the load R2, and the voltage of the phase O is no longer 0 V, but is a value that deviates from 0 V. Because the phase U is connected to the positive bus, and the phase W is connected to the negative bus, the voltage of the phase O is a value less than 0. Therefore, both the voltage between the phase U and the phase O and the voltage between the phase O and the phase W deviate from the rated value.

Specifically, for example, the voltage threshold is 2 V When the voltage between the phase U and the phase W is 202 V, if the voltage of the phase O is -3 V, the voltage between the phase U and the phase O is 104 V, and the voltage between the phase O and the phase W is 98 V. In other words, a voltage difference between the voltage between the phase U and the phase O and the voltage between the phase O and the phase W is 6 V, and the voltage difference is greater than the voltage threshold. The controller may control the switching transistor G5 in the balanced circuit to be turned on.

To reduce the voltage difference between the voltage between the phase U and the phase O and the voltage between the phase O and the phase W, it may be considered to increase the voltage of the phase O. Because the switching transistor G5 is connected to the positive bus, the controller controls the switching transistor G5 to be turned on. When the switching transistor G5 is turned on, the positive voltage of the direct current output on the positive bus may increase the voltage of the phase O, so that the voltage between the phase U and the phase O decreases, and the voltage between the phase O and the phase W increases. When the voltage difference between the voltage between the phase U and the phase O and the voltage between the phase O and the phase W is less than or equal to the voltage threshold, the controller turns off the switching transistor G5, to reduce the voltage difference between the voltage between the phase U and the phase O and the voltage between the phase O and the phase W, so as to solve the problem of the imbalance between the voltage between the phase U and the phase O and the voltage between the phase O and the phase W.

(2) When the rated power of the load R1 is greater than the rated power of the load R2, the voltage of the load R1 is less than the voltage of the load R2. When the switching transistors G1 and G4 are turned on, a current flow direction is shown in FIG. 10. Refer to FIG. 10. When a part of the direct current output by the photovoltaic module flows through the switching transistor G1, the inductor L1, the load R2, the load R1, the inductor L1, and the switching transistor G4 to form a current loop, the other part of the direct current flows through the switching transistor G5, the inductor L2, the load R1, the inductor L1, and the switching transistor G4 to form a current loop.

In this embodiment of this application, when the switching transistors G1 and G4 are turned on, the phase U is connected to the negative bus, and the phase W is connected to the positive bus. When the rated power of the load R1 is greater than the rated power of the load R2, the voltage of the load R1 is less than the voltage of the load R2, and the voltage of the phase O is no longer 0 V, but is a value that deviates from 0 V. Because the phase U is connected to the negative bus, and the phase W is connected to the positive bus, the voltage of the phase O is a value less than 0. Therefore, both the voltage between the phase U and the phase O and the voltage between the phase O and the phase W deviate from the rated value.

Specifically, for example, the voltage threshold is 2 V When the voltage between the phase U and the phase W is 202 V, if the voltage of the phase O is -3 V, the voltage between the phase U and the phase O is 98 V, and the voltage between the phase O and the phase W is 104 V. In other words, a voltage difference between the voltage between the phase U and the phase O and the voltage between the phase O and the phase W is 6 V, and the voltage difference is greater than the voltage threshold. The controller may control the switching transistor G5 in the balanced circuit to be turned on.

To enable the voltage between the phase U and the phase O and the voltage between the phase O and the phase W to reach the rated value, it may be considered to increase the voltage of the phase O. Because the switching transistor G5 is connected to the positive bus, the controller controls the switching transistor G5 to be turned on. When the switching transistor G5 is turned on, the positive voltage on the positive bus may increase the voltage of the phase O, so that the voltage between the phase U and the phase O increases, and the voltage between the phase O and the phase W decreases. When the voltage difference between the voltage between the phase U and the phase O and the voltage between the phase O and the phase W is less than or equal to the voltage threshold, the controller turns off the switching transistor G5, to reduce the voltage difference between the voltage between the phase U and the phase O and the voltage between the phase O and the phase W, so as to solve the problem of the imbalance between the voltage between the phase U and the phase O and the voltage between the phase O and the phase W.

It should be noted that, in this embodiment of this application, when the switching transistors G2 and G3 are turned on, the freewheel diodes of the switching transistors G1 and G4 perform freewheeling. Because a current of the inductor L1 cannot change abruptly, a direction of a current flowing through the loads R1 and R2 also does not change abruptly, as shown in the current direction in FIG. 7 or FIG. 8. When the switching transistors G1 and G4 are turned on, the freewheel diodes of the switching transistors G2 and G3 perform freewheeling. Because the current of the inductor L1 cannot change abruptly, the direction of the current flowing through the loads R1 and R2 does not change abruptly, as shown in the current direction in FIG. 6 or FIG. 9.

In this embodiment of this application, the controller may control, based on a specific case, the switching transistors in the balanced circuit to be turned on. Specifically, when the voltage of the first load is greater than the voltage of the second load and the one group of switching transistors in the inverter circuit are turned on, or when the voltage of the first load is less than a voltage of the second load and the another group of switching transistors in the inverter circuit are turned on, a voltage of the connection point between the two loads is high, the controller controls the switching transistor that is in the balanced circuit and that is directly connected to the negative bus to be turned on, and a negative voltage of the negative bus can reduce the voltage of the series connection point of the two loads, so as to reduce the voltage difference between the two loads. When the voltage of the first load is greater than the voltage of the second load and the another group of switching transistors are turned on, or when the voltage of the first load is less than the voltage of the second load and the one group of switching transistors are turned on, a voltage of the connection point between the two loads is low, the controller controls the switching transistor that is in the balanced circuit and that is directly connected to the positive bus to be turned on, and a positive voltage of the positive bus can improve the voltage of the series connection point of the two loads, so as to reduce the voltage difference between the two loads.

That the controller 340 controls the switching transistor G5 or the switching transistor G6 to be turned on in different cases is described above. The following describes a duty cycle of the switching transistor G5 or the switching transistor G6 that is specifically controlled by the controller 340.

In an embodiment, the inverter further includes a voltage loop regulator, a current loop regulator, and an amplitude limiter. The amplitude limiter is configured to limit a maximum current value in the balanced circuit.

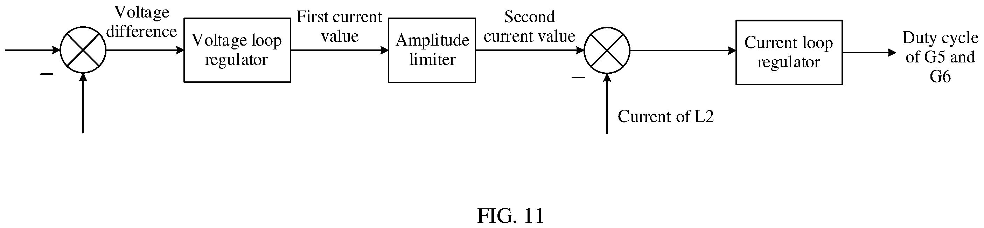

As shown in FIG. 11, the voltage loop regulator is configured to output a first current value based on the voltage difference. The amplitude limiter is configured to output a second current value based on the first current value. The current loop regulator is configured to generate a duty cycle of the switching transistors in the balanced circuit based on a current difference between the second current value and a current value on the first inductor L2, for the voltage difference to be less than the voltage threshold. The second current value is less than or equal to the first current value.

In this embodiment of this application, the voltage difference between the load R1 and the load R2 is used as an input of the voltage loop regulator. When the voltage loop regulator is stable, a corresponding current value is output, and the amplitude limiter outputs the second current value based on the current value. The current difference between the second current value and the current flowing through the first inductor L2 is used as an input of the current loop regulator, and the current loop regulator outputs the duty cycle of the switching transistor G5 or G6, so that the current difference is less than the current threshold, and the voltage difference is less than the voltage threshold.

Specifically, when the voltage difference between the load R1 and the load R2 is 6 V, the 6 V voltage is used as an input of the voltage loop regulator. When the voltage loop regulator is stable, a corresponding current value is output. It is assumed that the current value is 5 A, and the amplitude limiter outputs the second current value based on the current value. For example, the second current value is also 5 A. The current difference between the current value of the 5 A and the current flowing through the first inductor is used as an input of the current loop regulator, and the current loop regulator outputs the duty cycle of the switching transistor G5, for example, the duty cycle is 0.5. When the controller controls the switch transistor G5 to be turned on and the duty cycle is 0.5, the voltage difference between the load R1 and the load R2 gradually decreases until the voltage difference is less than the voltage threshold.

In an embodiment, if the first current value is less than or equal to the absolute value of the maximum current value, the second current value is equal to the first current value. If the first current value is greater than the absolute value of the maximum current value, the second current value is equal to the maximum current value.

In this embodiment of this application, the amplitude limiter is configured to limit the maximum current value in the balanced circuit, and the second current value output by the amplitude limiter is less than or equal to the absolute value of the maximum current value, so that a switching transistor damage caused by a large current flowing through the switching transistor in the balanced circuit can be avoided, and a circuit topology can be protected. The maximum current value includes a maximum forward current value and a maximum reverse current value. If the first current value is less than or equal to the absolute value of the maximum current value, that is, the first current value is less than or equal to the maximum forward current value, or the first current value is greater than or equal to the maximum reverse current value, the current value output by the amplitude limiter is equal to the current value input by the amplitude limiter. If the first current value is greater than the maximum forward current value, the current value output by the amplitude limiter is the maximum forward current value used by the amplitude limiter to limit the balanced circuit. If the first current value is less than the maximum reverse current value, the current value output by the amplitude limiter is the maximum reverse current value used by the amplitude limiter to limit the balanced circuit.

For example, an absolute value of the maximum current value in the balanced circuit is 10 A. If the current value output by the voltage loop regulator is 5 A, and the current value is less than the absolute value of the maximum current value in the balanced circuit, the current value output by the amplitude limiter is 5 A. If the current value output by the voltage loop regulator is 12 A, and the current value is greater than the absolute value of the maximum current value in the balanced circuit, the current value output by the amplitude limiter is 10 A.

For ease of understanding, the following first briefly describes a dead time of the switching transistor.

Two switching transistors on a same bridge arm in the inverter circuit cannot be turned on at the same time. Otherwise, a current directly flows through the two switching transistors, resulting in a short circuit between a positive electrode and a negative electrode of the power supply. To prevent two switching transistors on a same bridge arm from being turned on at the same time, there is a period of time in which the switching transistors on the upper and lower bridge arms are turned off during switching of the switching transistors, and the period of time is referred to as a dead time.

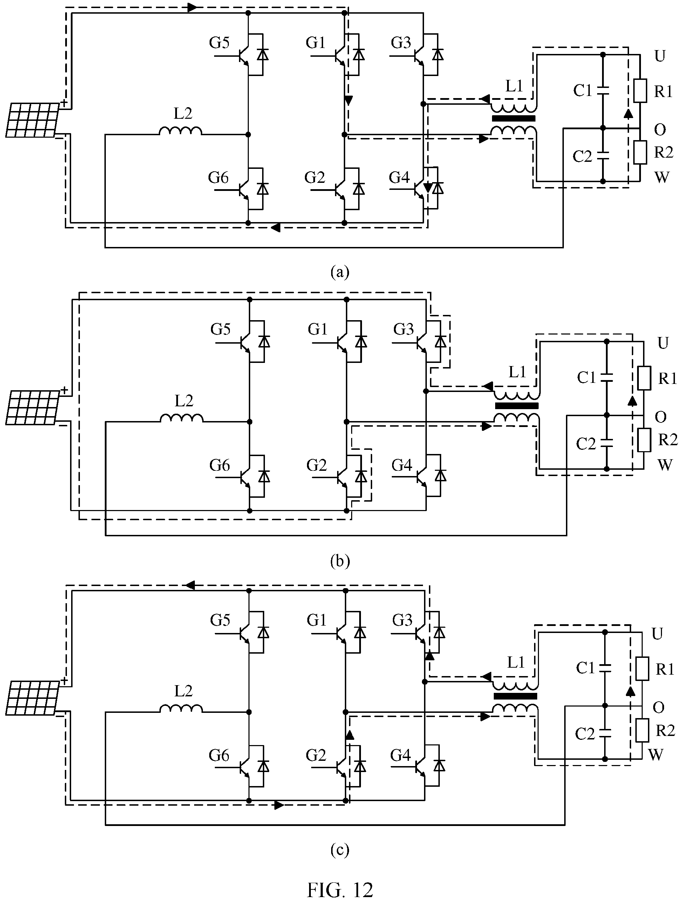

Still refer to FIG. 3. From a moment 0 to a moment t1, the switching transistors G1 and G4 are turned on, a current flow direction is shown in (a) in FIG. 12, and a current flows through the switching transistor G1, the inductor L1, the load R1, the load R2, the inductor L1, and the switching transistor G4 to form a current loop.

At the moment t1, the controller controls base signals of the switching transistors G1 and G2 to be reversed, and base signals of the switching transistors G3 and G4 to be reversed, so that the switching transistors G1 and G4 are turned off. Because the current in the inductor L1 cannot change abruptly, the switching transistors G2 and G3 cannot be turned on immediately, and the freewheel diodes of the switching transistors G2 and G3 are turned on for freewheeling. A current flow direction is shown in (b) in FIG. 12.

At a moment t2, the freewheel diode of the switching transistor G2 and the freewheel diode of the switching transistor G3 are cut off, and the switching transistor G2 and the switching transistor G3 start to be turned on. A current flow direction is shown in (c) in FIG. 12.

In conclusion, in any one of the foregoing stages, a case in which the switching transistors G1 and G2 are turned on at the same time or the switching transistors G3 and G4 are turned on at the same time does not exist, so that a short circuit between the positive electrode and the negative electrode of the power supply is avoided. A time period from t1 to t2 may be referred to as a dead time.

As described above, when the switching transistors G2 and G3 are turned on, the freewheel diodes of the switching transistors G1 and G4 perform freewheeling, and when the switching transistors G1 and G4 are turned on, the freewheel diodes of the switching transistors G2 and G3 perform freewheeling. Because the current of the inductor L1 cannot change abruptly, a direction of the current flowing through the loads R1 and R2 does not change abruptly.

It is assumed that a direction of the current flowing through the loads R1 and R2 when the switching transistors G2 and G3 are turned on is a positive half cycle, and a direction of the current flowing through the loads R1 and R2 when the switching transistors G1 and G4 are turned on is a negative half cycle. In this embodiment of this application, both a positive half cycle and a negative half cycle of each period include a plurality of dead times.

In some possible cases, even if the switching transistor G5 or the switching transistor G6 is turned on, the voltage difference between the voltage between the phase U and the phase O and the voltage between the phase O and the phase W is still large. Therefore, another measure can be taken to further improve the performance. See below for more details.

In an embodiment, the controller 340 is further configured to reduce a dead time of the switching transistor in the inverter circuit 310.

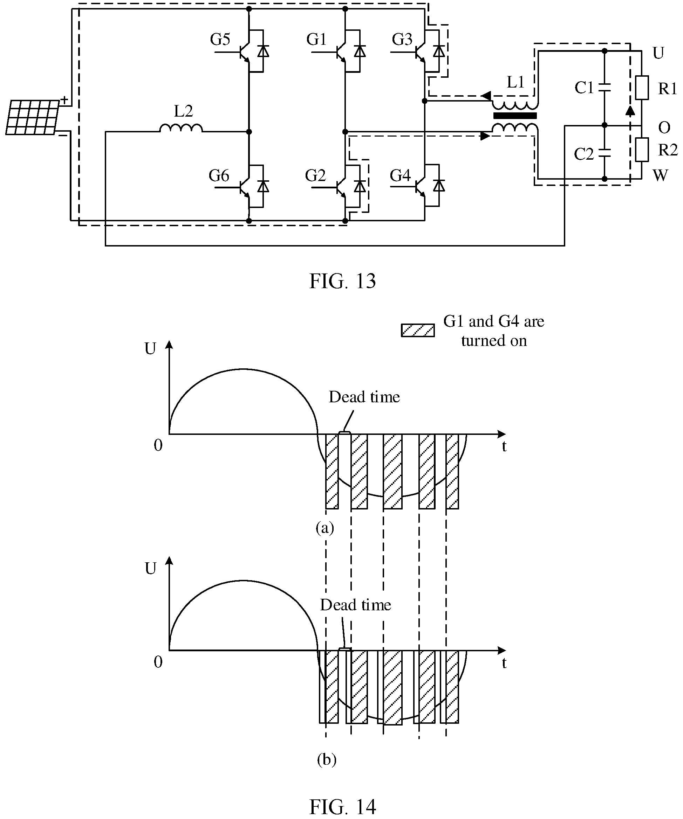

In this embodiment of this application, by reducing the dead time of the switching transistor in the inverter circuit, the controller may further reduce the voltage difference between the voltage between the phase U and the phase O and the voltage between the phase O and the phase W, so as to improve a case of imbalance between the two voltages.
1. Refer to FIG. 7. When the rated power of the load R1 is less than the rated power of the load R2 and the switching transistors G1 and G4 are turned on, a current flows through the switching transistor G1, the inductor L1, the load R2, the load R1, the inductor L1, and the switching transistor G4 to form a current loop, where the current loop may be referred to as a main power loop of G1 and G4. When the switching transistors G1 and G4 are turned off, because the current in the inductor L1 cannot change abruptly, the current in the inductor L1 is freewheeled through the freewheel diode of the switching transistor G2 and the freewheel diode of the switching transistor G3. The current loop may be referred to as a freewheeling loop of G2 and G3. The specific freewheeling loop is shown in FIG. 13.

When the switching transistors are switched from the freewheeling loop of G2 and G3 to the main power loop of G1 and G4, because the rated power of the load R1 is less than the rated power of the load R2, and the current flowing through the load R1 is less than the current flowing through the load R2, the current flows through the freewheel diode of the switching transistor G4 preferentially. Especially when the rated power of the load R1 is far less than the rated power of the load R2, a phenomenon in which the current flows through the freewheel diode of the switching transistor G4 preferentially is more obvious. When the current flows through the freewheel diode of the switching transistor G4 preferentially, and the phase U is connected to the negative bus, a voltage of the phase U decreases. This causes a further increase of the voltage between the phase U and the phase O, and aggravates the imbalance between the voltage between the phase U and the phase O and the voltage between the phase O and the phase W. In other words, in the dead time of switching from the freewheeling loop of G2 and G3 to the main power loop of G1 and G4, the current flows through the freewheel diode of the switching transistor G4 preferentially, and this is not conducive to reducing the imbalance between the voltage between the phase U and the phase O and the voltage between the phase O and the phase W.

For example, when the switching transistors are switched from the freewheeling loop of G2 and G3 to the main power loop of G1 and G4, if the current does not flow through the freewheel diode of the switching transistor G4 preferentially, a corresponding pulse width modulation (pulse width modulation , PWM) wave is shown in (a) in FIG. 14. When the switching transistors are switched from the freewheeling loop of G2 and G3 to the main power loop of G1 and G4, if the current flows through the freewheel diode of the switching transistor G4 preferentially, a corresponding PWM wave is shown in (b) in FIG. 14. With reference to (a) in FIG. 14 and (b) in FIG. 14, it can be learned that, a width of the PWM wave shown in (b) in FIG. 14 is wide. This is because the current flows through the freewheel diode of the switching transistor G4 preferentially, and consequently, the phase U is connected to the negative bus in advance, and widths of all pulses in an entire sine period are widened. After being filtered by a capacitor, a valid value of an equivalent sine signal increases, thereby aggravating the imbalance between the voltage between the phase U and the phase O and the voltage between the phase O and the phase W. Therefore, in this embodiment of this application, the controller may control to reduce the dead time, so as to improve the imbalance between the voltage between the phase U and the phase O and the voltage between the phase O and the phase W.

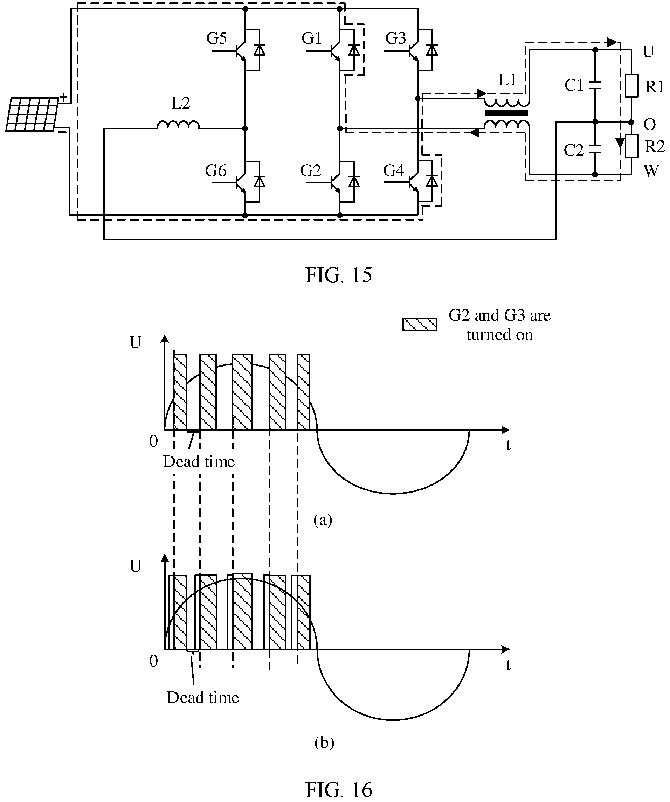

2. Refer to FIG. 8. When the rated power of the load R1 is greater than the rated power of the load R2 and the switching transistors G2 and G3 are turned on, a current flows through the switching transistor G3, the inductor L1, the load R1, the load R2, the inductor L1, and the switching transistor G2 to form a current loop, where the current loop may be referred to as a main power loop of G2 and G3. When the switching transistors G2 and G3 are turned off, because the current in the inductor L1 cannot change abruptly, the current in the inductor L1 is freewheeled through the freewheel diode of the switching transistor G1 and the freewheel diode of the switching transistor G4. The current loop may be referred to as a freewheeling loop of G1 and G4. The specific freewheeling loop is shown in FIG. 15.

When the switching transistors are switched from the freewheeling loop of G1 and G4 to the main power loop of G2 and G3, because the rated power of the load R1 is greater than the rated power of the load R2, and the current flowing through the load R1 is greater than the current flowing through the load R2, the current flows through the freewheel diode of the switching transistor G2 preferentially. Especially when the rated power of the load R1 is far greater than the rated power of the load R2, a phenomenon in which the current flows through the freewheel diode of the switching transistor G2 preferentially is more obvious. When the current flows through the freewheel diode of the switching transistor G2 preferentially, and the phase W is connected to the negative bus, a voltage of the phase W decreases. This causes a further increase of the voltage between the phase W and the phase O, and aggravates the imbalance between the voltage between the phase U and the phase O and the voltage between the phase O and the phase W. In other words, in the dead time of switching from the freewheeling loop of G1 and G4 to the main power loop of G2 and G3, the current flows through the freewheel diode of the switching transistor G2 preferentially, and this is not conducive to reducing the imbalance between the voltage between the phase U and the phase O and the voltage between the phase O and the phase W.

For example, when the switching transistors are switched from the freewheeling loop of G1 and G4 to the main power loop of G2 and G3, if the current does not flow through the freewheel diode of the switching transistor G2 preferentially, a corresponding PWM wave is shown in (a) in FIG. 16. When the switching transistors are switched from the freewheeling loop of G1 and G4 to the main power loop of G2 and G3, if the current flows through the freewheel diode of the switching transistor G2 preferentially, a corresponding PWM wave is shown in (b) in FIG. 16. With reference to (a) in FIG. 16 and (b) in FIG. 16, it can be learned that, a width of the PWM wave shown in (b) in FIG. 16 is wide. This is because the current flows through the freewheel diode of the switching transistor G2 preferentially, and consequently, the phase W is connected to the negative bus in advance, and widths of all pulses in an entire sine period are widened. After being filtered by a capacitor, a valid value of an equivalent sine signal increases, thereby aggravating the imbalance between the voltage between the phase U and the phase O and the voltage between the phase O and the phase W. Therefore, in this embodiment of this application, the controller may control to reduce the dead time, so as to improve the imbalance between the voltage between the phase U and the phase O and the voltage between the phase O and the phase W.

3. Refer to FIG. 9. When the rated power of the load R1 is less than the rated power of the load R2 and the switching transistors G2 and G3 are turned on, a current flows through the switching transistor G3, the inductor L1, the load R1, the load R2, the inductor L1, and the switching transistor G2 to form a current loop, where the current loop may be referred to as a main power loop of G2 and G3. When the switching transistors G2 and G3 are turned off, because the current in the inductor L1 cannot change abruptly, the current in the inductor L1 is freewheeled through the freewheel diode of the switching transistor G1 and the freewheel diode of the switching transistor G4. The current loop may be referred to as a freewheeling loop of G1 and G4. The specific current loop is shown in FIG. 15.

When the switching transistors are switched from the freewheeling loop of G1 and G4 to the main power loop of G2 and G3, because the rated power of the load R1 is less than the rated power of the load R2, and the current flowing through the load R1 is less than the current flowing through the load R2, the current flows through the freewheel diode of the switching transistor G3 preferentially. Especially when the rated power of the load R1 is far less than the rated power of the load R2, a phenomenon in which the current flows through the freewheel diode of the switching transistor G3 preferentially is more obvious. When the current flows through the freewheel diode of the switching transistor G3 preferentially, and the phase U is connected to the positive bus, a voltage of the phase U increases. This causes a further increase of the voltage between the phase U and the phase O, and aggravates the imbalance between the voltage between the phase U and the phase O and the voltage between the phase O and the phase W. In other words, in the dead time of switching from the freewheeling loop of G1 and G4 to the main power loop of G2 and G3, the current flows through the freewheel diode of the switching transistor G3 preferentially, and this is not conducive to reducing the imbalance between the voltage between the phase U and the phase O and the voltage between the phase O and the phase W. Therefore, in this embodiment of this application, the controller may control to reduce the dead time, so as to improve the imbalance between the voltage between the phase U and the phase O and the voltage between the phase O and the phase W.

4. Refer to FIG. 10. When the rated power of the load R1 is greater than the rated power of the load R2 and the switching transistors G1 and G4 are turned on, a current flows through the switching transistor G1, the inductor L1, the load R2, the load R1, the inductor L1, and the switching transistor G4 to form a current loop, where the current loop may be referred as a main loop of G1 and G4. When the switching transistors G1 and G4 are turned off, because the current in the inductor L1 cannot change abruptly, the current in the inductor L1 is freewheeled through the freewheel diode of the switching transistor G2 and the freewheel diode of the switching transistor G3. The current loop may be referred to as a freewheeling loop of G2 and G3. The specific current loop is shown in FIG. 13.

When the switching transistors are switched from the freewheeling loop of G2 and G3 to the main power loop of G1 and G4, because the rated power of the load R1 is greater than the rated power of the load R2, and the current flowing through the load R1 is greater than the current flowing through the load R2, the current flows through the freewheel diode of the switching transistor G1 preferentially. Especially when the rated power of the load R1 is far greater than the rated power of the load R2, a phenomenon in which the current flows through the freewheel diode of the switching transistor G1 preferentially is more obvious. When the current flows through the freewheel diode of the switching transistor G1 preferentially, and the phase W is connected to the positive bus, a voltage of the phase W increases. This causes a further increase of the voltage between the phase W and the phase O, and aggravates the imbalance between the voltage between the phase U and the phase O and the voltage between the phase O and the phase W. In other words, in the dead time of switching from the freewheeling loop of G2 and G3 to the main power loop of G1 and G4, the current flows through the freewheel diode of the switching transistor G1 preferentially, and this is not conducive to reducing the imbalance between the voltage between the phase U and the phase O and the voltage between the phase O and the phase W. Therefore, in this embodiment of this application, the controller may control to reduce the dead time, so as to improve the imbalance between the voltage between the phase U and the phase O and the voltage between the phase O and the phase W.

In conclusion, when the one group of switching transistors in the inverter circuit are turned on and then turned off, a current of the coupled inductor flows through the freewheel diode of the another group of switching transistors in the inverter circuit to form a freewheeling loop. When the one group of switching transistors are turned on again, a current flows through a freewheel diode of one switching transistor in the one group of switching transistors preferentially, and this aggravates a problem of two-phase output voltage imbalance. Therefore, the controller may further reduce the voltage difference between the two loads by reducing the dead time of the switching transistor in the inverter circuit. In this way, a case of two-phase output voltage imbalance can be improved.

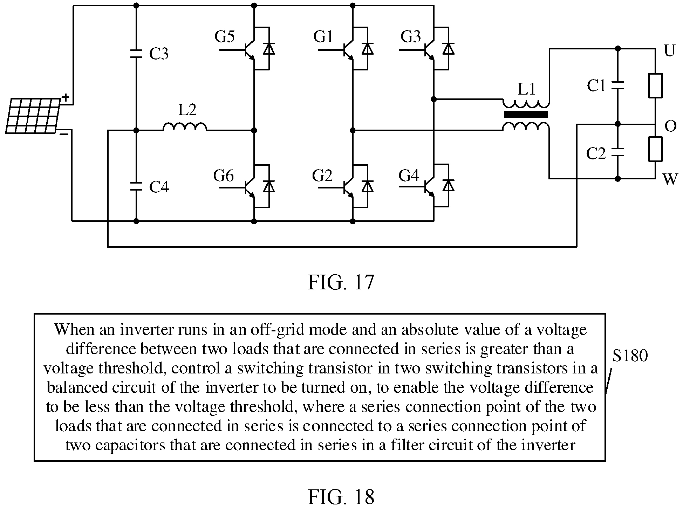

In an embodiment, as shown in FIG. 17, the inverter further includes another two capacitors C3 and C4 that are connected in series. The another two capacitors C3 and C4 that are connected in series are connected between the positive bus and the negative bus, and a series connection point of the another two capacitors C3 and C4 that are connected in series is connected to one end of the first inductor L2.

In this embodiment of this application, the two capacitors C3 and C4 that are connected in series can improve a capability of improving two-phase output voltage imbalance. Specifically, FIG. 3 is used as an example. In some possible cases, the switching transistors G5 and G6 in the balanced circuit may not be able to limitlessly reduce the voltage difference between the voltage between the phase U and the phase O and the voltage between the phase O and the phase W. The two additionally added capacitors C3 and C4 that are connected in series may further improve the imbalance between the voltage between the phase U and the phase O and the voltage between the phase O and the phase W.

For example, it is assumed that the switching transistors G5 and G6 in the balanced circuit can reduce the voltage difference to a maximum of 20 V When the additionally added capacitors C3 and C4 that are connected in series, the switching transistors G5 and G6 in the balanced circuit and the capacitors C3 and C4 may reduce the voltage difference to a maximum of 50 V.

In addition, the two capacitors C3 and C4 that are connected in series can reduce selection specifications of the switching transistors G5 and G6, thereby reducing costs. Specifically, FIG. 3 is still used as an example. The switching transistors G5 and G6 in the balanced circuit may have a large over-current capability, for example, a maximum current that can be borne by the switching transistors G5 and G6 reaches 60 A. When the capacitors C3 and C4 that are connected in series are additionally added, because the capacitors C3 and C4 may reduce the voltage difference between the voltage between the phase U and the phase O and the voltage between the phase O and the phase W, the current flowing through the switching transistors G5 and G6 due to the voltage difference decreases. Therefore, the over-current capability of the switching transistors G5 and G6 is reduced. In other words, the selection specifications of the switching transistors G5 and G6 are reduced, thereby reducing costs of the switching transistors G5 and G6.

In addition, this application further provides a photovoltaic plus storage system. The photovoltaic plus storage system includes a photovoltaic module, an energy storage apparatus, and the inverter according to any one of the foregoing embodiments. The energy storage apparatus is configured to store a direct current from the photovoltaic module, and the inverter is configured to convert the direct current from the photovoltaic module into an alternating current.

For the inverter in the energy storage system, refer to related descriptions in the foregoing embodiments. Details are not described again.

In addition, this application further provides an inverter control method. As shown in FIG. 18, the method includes step S180.

S 180: When an inverter runs in an off-grid mode and an absolute value of a voltage difference between two loads that are connected in series is greater than a voltage threshold, control a switching transistor in two switching transistors in a balanced circuit of the inverter to be turned on, for the voltage difference to be less than the voltage threshold, where a series connection point of the two loads that are connected in series is connected to a series connection point of two capacitors that are connected in series in a filter circuit of the inverter.

The filter circuit includes a coupled inductor and the two capacitors that are connected in series, two input ports of the coupled inductor are connected to an inverter circuit of the inverter, the two capacitors that are connected in series are connected between two output ports of the coupled inductor, the balanced circuit includes the two switching transistors and a first inductor, the two switching transistors are connected in series and then connected between a positive bus and a negative bus, one end of the first inductor is connected to a series connection point of the two switching transistors, and the other end of the first inductor is connected to the series connection point of the two capacitors that are connected in series.

In an embodiment, the controlling a switching transistor in two switching transistors in a balanced circuit of the inverter to be turned on includes: When a voltage of a first load is greater than a voltage of a second load and one group of switching transistors in the inverter circuit are turned on, or when a voltage of a first load is less than a voltage of the second load and another group of switching transistors in the inverter circuit are turned on, controlling a switching transistor that is in the balanced circuit and that is directly connected to the negative bus to be turned on; or when a voltage of a first load is greater than a voltage of a second load and another group of switching transistors in the inverter circuit are turned on, or when a voltage of a first load is less than a voltage of a second load and one group of switching transistors in the inverter circuit are turned on, controlling a switching transistor that is in the balanced circuit and that is directly connected to the positive bus to be turned on.

The inverter circuit includes a first bridge arm and a second bridge arm, each of the first bridge arm and the second bridge arm includes two switching transistors that are connected in series, and each switching transistor includes a parallel freewheel diode and freewheeling directions of all freewheel diodes are the same. One switching transistor of the first bridge arm and one switching transistor of the second bridge arm form an upper half bridge arm, and the other switching transistor of the first bridge arm and the other switching transistor of the second bridge arm form a lower half bridge arm. The one switching transistor of the first bridge arm and the other switching transistor of the second bridge arm are the one group of switching transistors, and the other switching transistor of the first bridge arm and the one switching transistor of the second bridge arm are the another group of switching transistors. One end of the first load is connected to a series connection point of the two switching transistors of the second bridge arm through the filter circuit, and one end of the second load is connected to a series connection point of the two switching transistors of the first bridge arm through the filter circuit. The series connection point of the first load and the second load is connected to the series connection point of the two capacitors that are connected in series.

In an embodiment, the method further includes: reducing a dead time of the switching transistor in the inverter circuit.

For the inverter control method, refer to the foregoing related content. Details are not described again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An inverter, comprising an inverter circuit, a filter circuit, and a balanced circuit, wherein
the inverter circuit is configured to convert a direct current into an alternating current, the filter circuit is configured to filter the alternating current, and a filtered alternating current is used to supply power to a load;
the filter circuit comprises a coupled inductor and two capacitors that are connected in series, wherein two input ports of the coupled inductor are connected to the inverter circuit, and the two capacitors that are connected in series are connected between two output ports of the coupled inductor;
the balanced circuit comprises two switching transistors and a first inductor, wherein the two switching transistors are connected in series and then connected between a positive bus and a negative bus, one end of the first inductor is connected to a series connection point of the two switching transistors, and the other end of the first inductor is connected to a series connection point of the two capacitors that are connected in series; and
the inverter further comprises a controller, wherein the controller is configured to:
when the inverter runs in an off-grid mode and an absolute value of a voltage difference between two loads that are connected in series is greater than a voltage threshold, control a switching transistor in the two switching transistors to be turned on, to enable the voltage difference to be less than the voltage threshold, wherein a series connection point of the two loads that are connected in series is connected to the series connection point of the two capacitors that are connected in series.

2. The inverter according to claim 1, wherein the inverter circuit comprises a first bridge arm and a second bridge arm, each of the first bridge arm and the second bridge arm comprises two switching transistors that are connected in series, each switching transistor comprises a parallel freewheel diode and freewheeling directions of all freewheel diodes are the same, one switching transistor of the first bridge arm and one switching transistor of the second bridge arm form an upper half bridge arm, the other switching transistor of the first bridge arm and the other switching transistor of the second bridge arm form a lower half bridge arm, the one switching transistor of the first bridge arm and the other switching transistor of the second bridge arm are one group of switching transistors, and the other switching transistor of the first bridge arm and the one switching transistor of the second bridge arm are another group of switching transistors;
the two loads comprise a first load and a second load, one end of the first load is connected to a series connection point of the two switching transistors of the second bridge arm through the filter circuit, one end of the second load is connected to a series connection point of the two switching transistors of the first bridge arm through the filter circuit, and the series connection point of the first load and the second load is connected to the series connection point of the two capacitors that are connected in series; and
the controller is configured to:
when a voltage of the first load is greater than a voltage of the second load and the one group of switching transistors are turned on, or when a voltage of the first load is less than a voltage of the second load and the another group of switching transistors are turned on, control a switching transistor that is in the balanced circuit and that is directly connected to the negative bus to be turned on; or
when a voltage of the first load is greater than a voltage of the second load and the another group of switching transistors are turned on, or when a voltage of the first load is less than a voltage of the second load and the one group of switching transistor are turned on, control a switching transistor that is in the balanced circuit and that is directly connected to the positive bus to be turned on.

3. The inverter according to claim 2, wherein the inverter further comprises a voltage loop regulator, a current loop regulator, and an amplitude limiter, wherein the amplitude limiter is configured to limit a maximum current value in the balanced circuit; and
the voltage loop regulator is configured to output a first current value based on the voltage difference, the amplitude limiter is configured to output a second current value based on the first current value, and the current loop regulator is configured to generate a duty cycle of the switching transistors in the balanced circuit based on a current difference between the second current value and a current value on the first inductor, to enable the voltage difference to be less than the voltage threshold, wherein the second current value is less than or equal to the first current value.

4. The inverter according to claim 3, wherein if the first current value is less than or equal to an absolute value of the maximum current value, the second current value is equal to the first current value; or
if the first current value is greater than an absolute value of the maximum current value, the second current value is equal to the maximum current value.

5. The inverter according to any one of claims 2 to 4, wherein the controller is further configured to:
reduce a dead time of the switching transistors in the inverter circuit.

6. The inverter according to any one of claims 1 to 5, wherein the inverter further comprises another two capacitors that are connected in series, the another two capacitors that are connected in series are connected between the positive bus and the negative bus, and a series connection point of the another two capacitors that are connected in series is connected to one end of the first inductor.

7. A photovoltaic plus storage system, comprising a photovoltaic module, an energy storage apparatus, and the inverter according to any one of claims 1 to 6, wherein the energy storage apparatus is configured to store a direct current from the photovoltaic module, and the inverter is configured to convert the direct current from the photovoltaic module into an alternating current.

8. An inverter control method, comprising:
when an inverter runs in an off-grid mode and an absolute value of a voltage difference between two loads that are connected in series is greater than a voltage threshold, controlling a switching transistor in two switching transistors in a balanced circuit of the inverter to be turned on, to enable the voltage difference to be less than the voltage threshold, wherein a series connection point of the two loads that are connected in series is connected to a series connection point of two capacitors that are connected in series in a filter circuit of the inverter, wherein
the filter circuit comprises a coupled inductor and the two capacitors that are connected in series, two input ports of the coupled inductor are connected to an inverter circuit of the inverter, the two capacitors that are connected in series are connected between two output ports of the coupled inductor, the balanced circuit comprises the two switching transistors and a first inductor, the two switching transistors are connected in series and then connected between a positive bus and a negative bus, one end of the first inductor is connected to a series connection point of the two switching transistors, and the other end of the first inductor is connected to the series connection point of the two capacitors that are connected in series.

9. The inverter control method according to claim 8, wherein the controlling a switching transistor in two switching transistors in a balanced circuit of the inverter to be turned on comprises:
when a voltage of a first load is greater than a voltage of a second load and one group of switching transistors in the inverter circuit are turned on, or when a voltage of a first load is less than a voltage of the second load and another group of switching transistors in the inverter circuit are turned on, controlling a switching transistor that is in the balanced circuit and that is directly connected to the negative bus to be turned on; or
when a voltage of a first load is greater than a voltage of a second load and another group of switching transistors in the inverter circuit are turned on, or when a voltage of a first load is less than a voltage of a second load and one group of switching transistors in the inverter circuit are turned on, controlling a switching transistor that is in the balanced circuit and that is directly connected to the positive bus to be turned on, wherein
the inverter circuit comprises a first bridge arm and a second bridge arm, each of the first bridge arm and the second bridge arm comprises two switching transistors that are connected in series, each switching transistor comprises a parallel freewheel diode and freewheeling directions of all freewheel diodes are the same, one switching transistor of the first bridge arm and one switching transistor of the second bridge arm form an upper half bridge arm, the other switching transistor of the first bridge arm and the other switching transistor of the second bridge arm form a lower half bridge arm, the one switching transistor of the first bridge arm and the other switching transistor of the second bridge arm are the one group of switching transistors, the other switching transistor of the first bridge arm and the one switching transistor of the second bridge arm are the another group of switching transistors, one end of the first load is connected to a series connection point of the two switching transistors of the second bridge arm through the filter circuit, one end of the second load is connected to a series connection point of the two switching transistors of the first bridge arm through the filter circuit, and the series connection point of the first load and the second load is connected to the series connection point of the two capacitors that are connected in series.

10. The inverter control method according to claim 9, wherein the method further comprises:
reducing a dead time of the switching transistors in the inverter circuit.
